# EUROPEAN PATENT APPLICATION

(11) **EP 0 713 841 A1**
(43) Date of publication of application: **29.05.1996**
(21) Application number: 95908945.9
(22) Date of filing: 23.02.1995
(51) Int. Cl.: C02F 1/24, C02F 3/12, C02F 3/28

(54) **INTEGRATED SYSTEM FOR TREATING WASTE WATERS**

(30) Priority: 23.02.1994 ES 9400391
(71) Applicant: UNIVERSIDAD DE OVIEDO, E-33003 Oviedo (ES)
(72) Inventor: GUTIERREZ, Antonio, E-33006 Oviedo (ES); DIAZ, Mario, E-33007 Oviedo (ES)
(74) Representative: Ibanez, José Francisco
(86) International application number: ES9500023
(87) International publication number: WO9523116

(57) **Abstract**

Integrated system for the treatment of waste waters, comprising the elements of primary treatment by flotation (1), a biological aeration tank (3) and a settling tank (3) for the separation of the sludge, all of these elements being integrated as a single equipment wherein, by controlling times and interactions as well as flows between the steps of flotation-aeration-settling, a waste water stream (4) may be treated in order to obtain a purified water (6) complying with the usual standards of purification, as well as muds and sludge (8) which can be concentrated.

## Description

The invention relates to a system for the treatment of waste waters, wether industrial, urban or mixed, with high integration of operations, which provides improvement in the interactions and in the flow requirements between the different stages of the treatment. The proposed system provides flexibility and monitoring advantages as well as cost reduction for the treatment of determined waste waters.

The invention has especial applicaton in the field of waste water treatments (urban and industrial) which waters contain substantial amounts of oils/fats and other floatable materials, as well as organic material liable to be eliminated by biological degradation.

### State of the art

Flotation as a primary operation in urban waste water treatment is well known. This operation has been carried out in a continuous process with a constant free surface which is kept in the course of operation. However, it has been also conceived as a separate and differentiated stage.

High capacity biological processes are usually classified as biomass supported processes (for example, filters, biodisks, columns) or biomass suspended processes (activated sludges and their different modifications). The system of the invention is foreseen to work in the field of biomass suspended processes, which essentially consist of two processes or stages: aeration and settling. In aeration biodegradable materials become transformed in gas, water and, particularly, cellular material, solids which have to be separated from the clean water to be supplied, usually by a process of settling.

Aeration is usually carried out in big continuous installations, essentially using turbines and bubblers. Turbines, which are far more extended, have a higher energetic yield, altough problems of appearance of mists are already mentioned. Bubblers, of different types, have some advantages for their adaptation to new types of bioreactors. There have also been proposed various forms of flow in continuous reactors, looking for a closer resemblance to successive degradation requirements.

Discontinuous reactors, less used and for lower flows, were proposed since the beginnig of this century, and could still be used by a better adjustment of the degradation needs according to time.

Settling is usually realized in a continuous way in big installations. The discontinuous process is well known, and it is especially used in laboratory, for example to design the continuous process. It seems that the discontinuous process of highest volume appears when discontinuous aeration is realized, usually followed by a discontinuous separation of solids, constituting then the sequential type processes.

In short, in the process of waste water treatment with flotation and activated sludges, both in continuous, three tanks are required (T1, T2, T3), with a 100% time operation for each one:

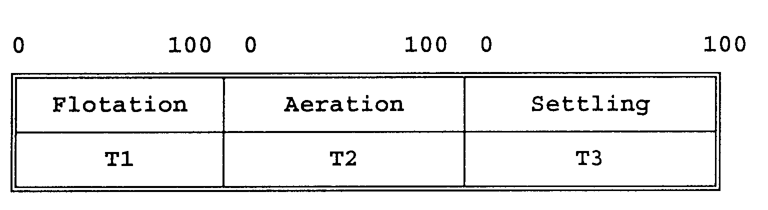

In the processes of sequential reactor type, within the system of separated tanks, three tanks are required:

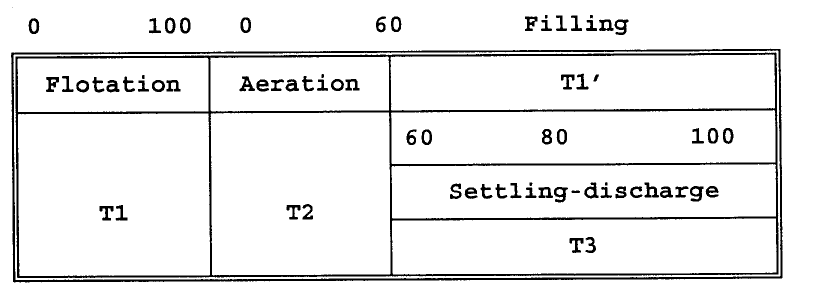

or two tanks, one being separated in zones, if dispersion of flow is exploited:

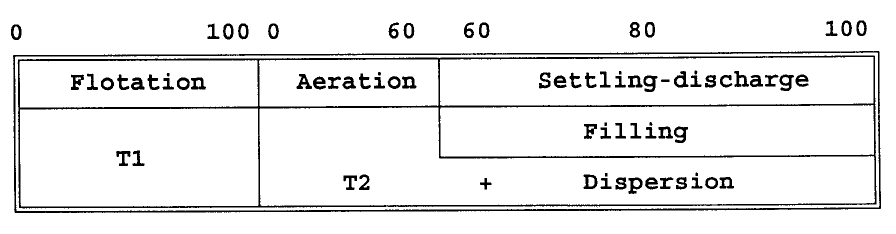

### Description of the invention

Integration of flotation with other operations involved in biological treatment of waste waters could take advantage of different synergisms, especially with aeration process, and even provide a separation of biological flocs at the top of the operation by means of flotation. Therefore, according to the invention, different possible alternatives are proposed, some operation options are choosen depending on the type of water to be treated, and technical solutions are proposed to realize the planned operation outlines.

The system of the invention comprises an integrated treatment tank to which the waste water is supplied, after elimination of thick solids by pre-sieving, and where it will be continuously subjected to flotation, mixture-delay-acclimatation, and aeration-settling processes. Feeding can be continuous or discontinuous, whereas aeration-settling are sequential.

The main feature of the system of the invention is that there is an interaction which is monitored within the different stages: flotation, aeration and settling. The interaction between aeration and settling is similar to that of the sequential processes, but with the characteristic that separation of sludges can also be achieved by flotation. Aeration and flotation are simultaneous in some stages of the process, and the flotation of oils and floatable solids is influenced by the presence of biological flocs during flotation.

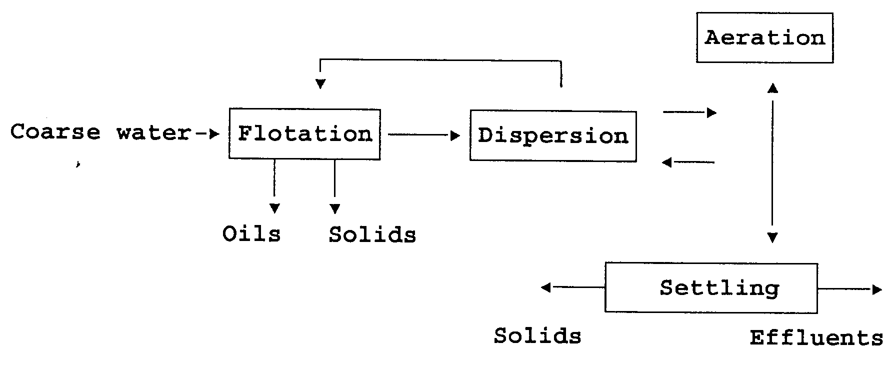

The invention proposes to integrate in one system the flotation-aeration-settling processes, what is advantageous for the treatment of different waste waters.

The classification of the processes which are integrated can be made from the following options:

### - Flotation:

(1 - - - ) with constant free surface,
(2 - - - ) with variable free surface, which can be divided into:
(2 - - - ) continuous (two zones, for example aerate on the centre, sweep on the sides), or
(2'- - - ) discontinuous (aerate-stopping-sweeping),
( - A - - ) with differentiation between flotation and dispersion zones,
( - B - - ) without differentiation of flotation and dispersion zones.

### - Aeration:

( - - 1 -) with variable free surface,
( - - 1'-) with constant free surface,
( - - 2 -) without neat separation (closure) of the previous chamber,
( - - 2'-) with neat separation (closure) of the previous chamber,
( - - 3 -) without separation of mixing zones,
( - - 3'-) with separation of mixing zones.

### - Settling:

( - - - 1) variable free surface,
( - - - 1') constant free surface,
( - - - 2) with extraction of supernatant, which can be:
( - - - 2) extractor at a fixed depth,
( - - - 2') extractor following the settling line.

When working with an integrated system, time paths are different from those of well-known classical treatments. A fraction of initial times according to the possible options is indicated in the following charts:

### - Basic option:

With equal air trajectory in the tank.

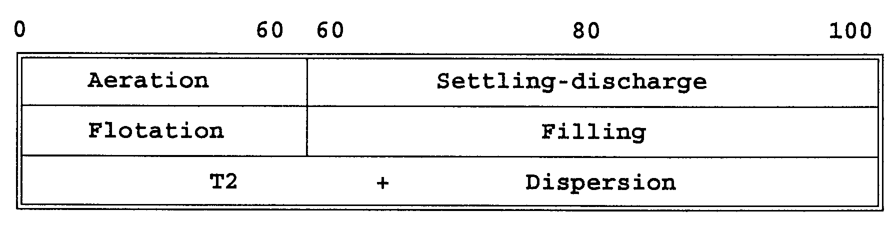

This is a simple option, without separation between zones, but on the contrary flotation is intermittent.

### - Advanced option:

With different air trajectory in the tank.

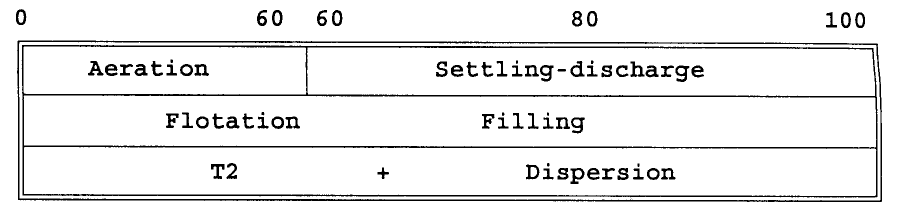

This is a more complex option, it allows a continuous operation of the flotation with the desired interaction for aeration-settling, thus requiring a higher control.

In all the above cycles, values 0, 60, 80, 100 are only indicative and must be adjusted in each operation according to the type of waste and kinetic characteristics.

The system of the invention presents interactions between flows and operations in the equipment with which are realized, such as:

### - Between flows, by means of:

Supernatants,
Lower flow,
Changement of levels by bubbling,
Air pumping,
Venturi.

### - Between operations:

### Flotation - settling

Sweeping the flocs from flocculation to the flotation cell. The separation of oils is favoured. Regulating the amount of oils which is extracted in relation to that separated by degradation.

### Flotation - aerobic

In flotation, aerobic degradation takes place at the same time, using this volume as a previous chamber, since there are also flocs. The separation of oils improves aerobic degradation.

### Aerobic - settling

The flocs just aerobized settle badly, that is why it is advisable to let them a time to freed, what is achieved by a discontinuous process.
On the other hand, during settling stabilized sludges are crossed over with a partially treated water stream, a short time, the organic matter being adsorbed in a similar way than in oxidation-stabilization.

In processes where aerobic-anaerobic stages are successive, for example for the elimination of nitrogen and phosphorus, several strategies can be developed, with the same or similar equipments, in order to produce denitrification in anoxic medium by soft agitation, which can even be in a periodical pneumatic manner, or in order to keep the phosphorus in the anaerobic process, for which cycles must be replaced depending on the desired elimination and the times of extraction and addition of streams.

Advantages of the system of the invention as opposed to other existing methods can be summarized in:
- Compact system.
- Integrated system.
- Flexible system.
- Easy to operate.
- Easy adaptation to changes (more than SBR).
- Possibility of making a larger development in each of the three operations with the same equipment, increasing some and reducing others.
- Possibility of global and partial operation in continuous or discontinuous manner.
- Simultaneous separation of oils and sludges.
- Control of the flocs separation by flotation.
- Capacity to generate mixtures of oils and sludges for subsequent treatments.
- Possibility to separate organic material either mechanically (flotation) or by degradation-oxidation (aerobic-anaerobic).
- Operation with nitrification-denitrification.

It must be noted that where aeration process appears, when working with nitrification-denitrification it must be replaced with consecutive aerobic-anaerobic stages, so the use options of the system of the invention are multiplied.

### Description of the figures

In the annexed drawing sheets:

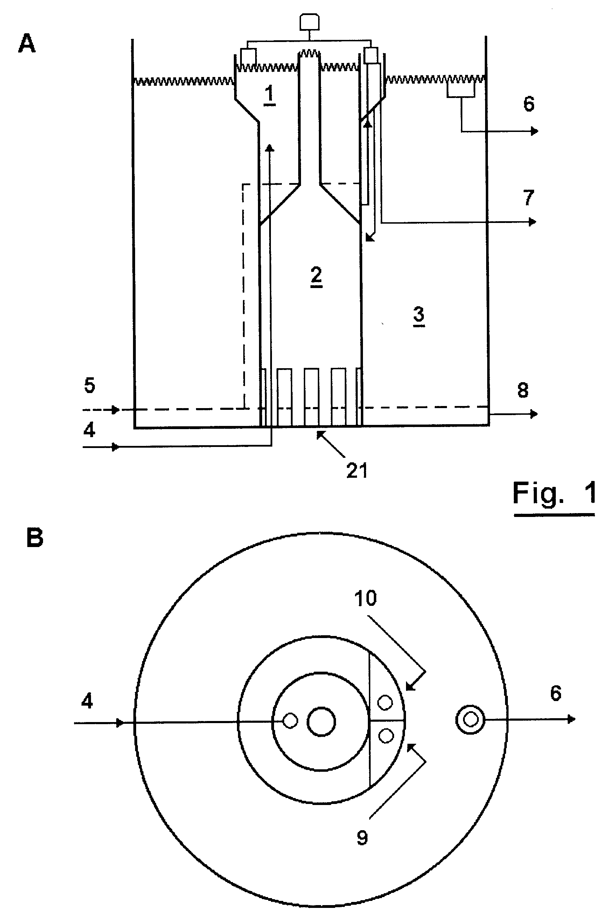

Figure 1 is a general schema (A elevation, B plan view,) of the system with provision of air pump. Numeral references designate the following elements: 1 flotation chamber, 2 mixing chamber, 3 aeration and settling chamber, 4 feeding, 5 air, 6 supernatant, 7 floats, 8 sludges, 9 float outlet, 10 oils discharge.
Figure 2 is a detail of the air pumping: 11 air pump tube, 12 closure of the oils and liquid outlet zone.

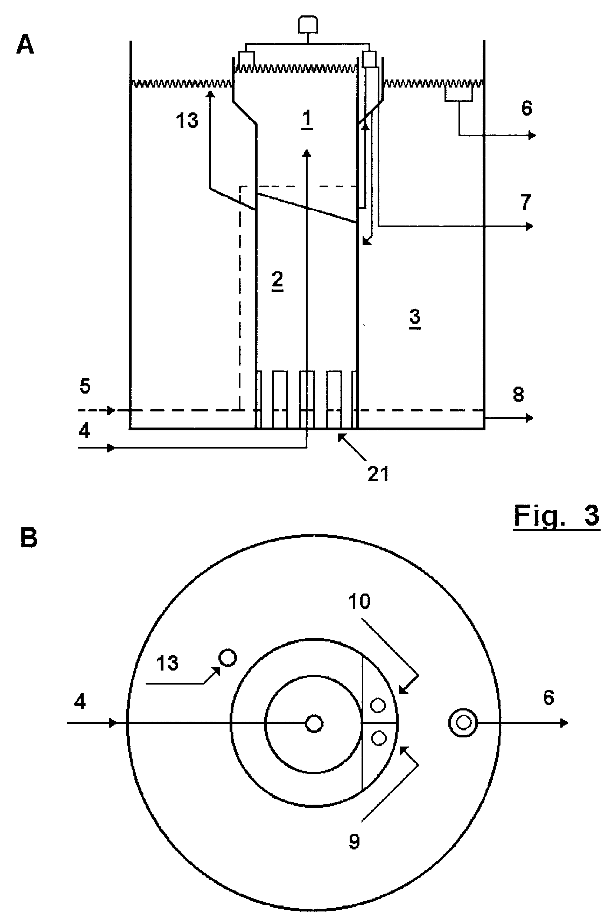

Figure 3 is a general schema (A elevation, B plan view) of the system with provision of venturi: 1 flotation chamber, 2 mixing chamber, 3 aeration and settling chamber, 4 feeding, 5 air, 6 supernatant, 7 floats, 8 sludges, 9 float outlet, 10 oils discharge, 13 air outlet from the mixing chamber.
Figure 4 represents embodiments of the venturi (A without extra air, B with extra air): 2 mixing chamber, 4 feeding, 5 air, 8 sludges.
Figure 5 represents the arrangement of diffusors inside the equipment (A lower plan view, B upper plan view): 5 air, 14 diffusors, 4 feeding, 6 supernatant.
Figure 6 represents (A side view, B frontal view) a porous diffusor 14 and its fastening: 15 collector.
Figure 7 represents feeding and aeration of the float (A side view, B perspective) : 4 feeding, 5 air, 14 diffusors, 11 air pump tube.
Figure 8 represents collection of floats in the float: 16 motor, 17 oil sweepers.
Figure 9 represents the sludges outlet from the float: 9 sludges discharge from the float.
Figure 10 represents the collection of floats and effluents in the float, as well as the inlet to the mixing chamber: 18 oils chamber, 10 collection hopper of oils and floats, 19 oils and floats outlet, 1 liquid chamber, 12 closure which separates the oils chamber from the liquid chamber, 20 conduit from flotation to mixing.
Figure 11 represents the communication openings from the mixing chamber to aeration chamber (A elevation, B plan view): 2 mixing chamber, 5 air, 21 openings.
Figure 12 represents a telesopic device for discharge of supernatant: 22 motor, 23 worm, 24 screen.
Figure 13 represents the general sludges discharge.
Figure 14 represents the accesses and the operation platform of the system (A elevation, B plan view) : 25 platform, 26 stairs.

### Embodiments of the invention

Here below are defined the required elements for the operation of an equipment according to the system of the invention:

### - Geometry of the reactor

Initially it is foreseen a circular geometry, having inside another elements of the same geometry, despite the geometry can be parallelepipedic, polygonal or a derivative, the inner elements being of equal or different geometry and placed in the sides or in the centre.

### - Diffusors

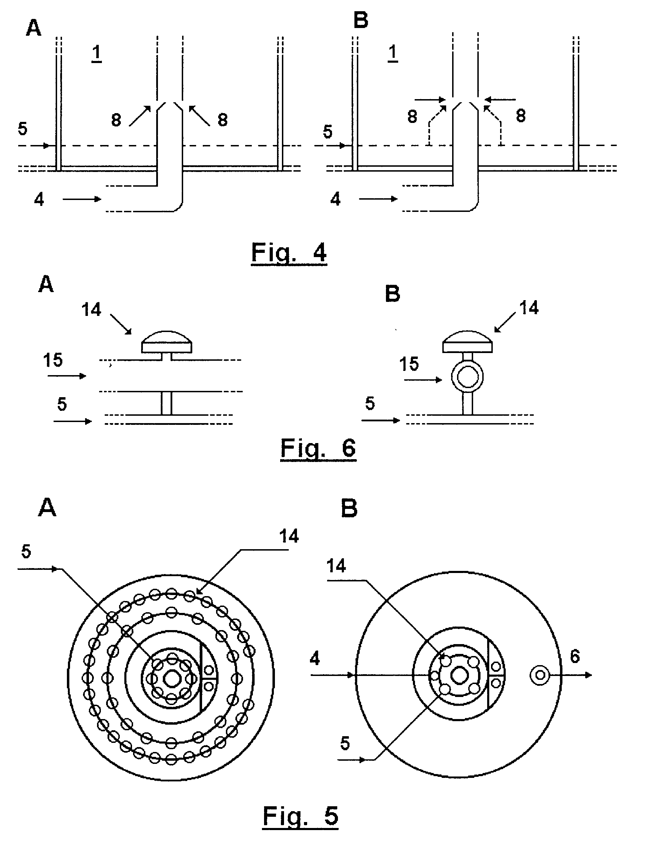

They are arranged in the system in two levels; one lower, near the bottom for general aeration, and a second upper, arranged in the float to provide the air for flotation (Figure 5). In both cases, the diffusors 14 will be arranged over general collectors 15 which will be supported at the bottom of the equipment (Figure 6). The diffusors can incorporate orifices or porous plates. In any case they must be able of acting (blowing) within short intervals (4 to 6 seconds), what can be also used as agitation during certain periods of anoxic condition.

### - Oils and floats separators

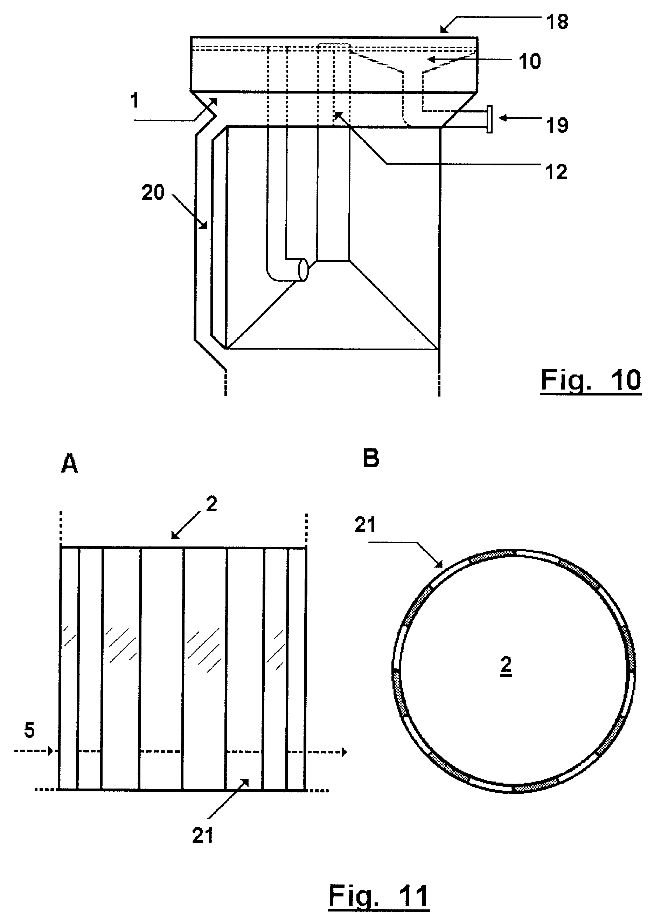

Oils/fats and floats are collected on the float surface and are swept by sweepers 17 (Figure 8) towards an outlet 19 after passing by a ramp which avoids the discharge of liquid (Figure 10).

### - Supernatant separation

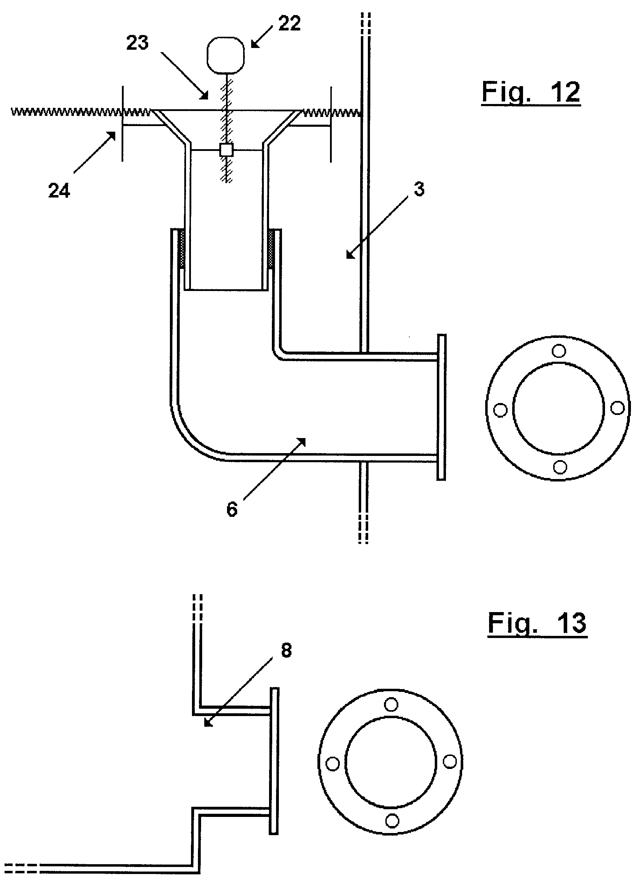

The clarified supernatant can be removed from the equipment either by a fixed conduit 6 arranged in its upper part or, for example, by a device with displacement inside the liquid mass which collects the liquid, such as a weir supported around an axle sinking in a programmed way, or a floating weir moved by a mechanism, or even a telescopic type weir (Figure 12) with programmed drive, either mecanichally or according to supernatant quality control.

### - Solids separators

The solids which remain in the bottom of the float are extracted by an automatic process, either outside the equipment or to the biologic reactor (Figure 9).

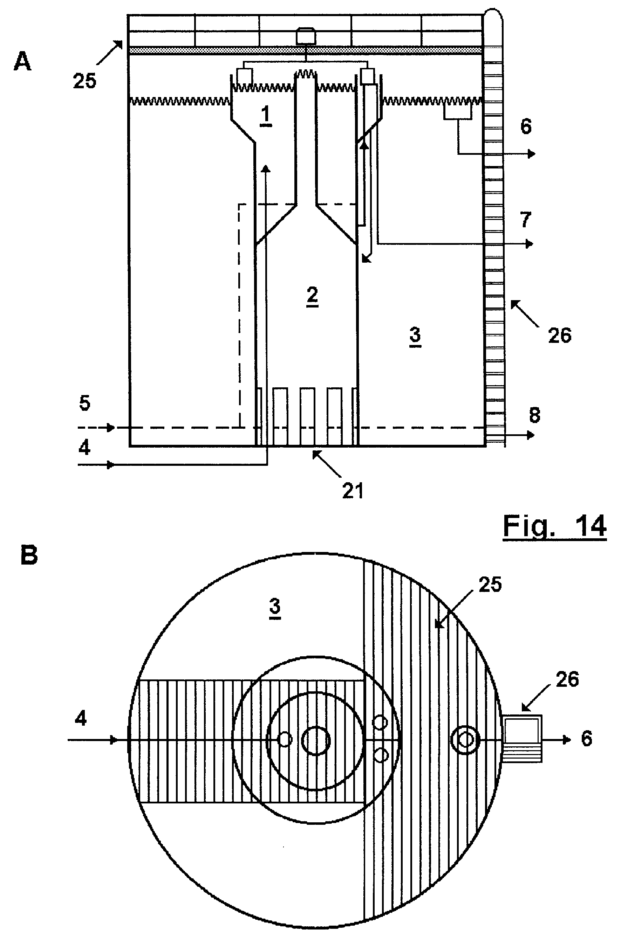

The solids generated in the biological treatment can be separated in the float, as floats, after passing from the reactor to the float, or in the reactor, an outlet conduit 8 at the bottom of the equipment (Figure 13) being arranged for this purpose. When an increase of the extracted solids concentration is desired a sump can be arranged in the reactor wall.

### - Interaction between zones

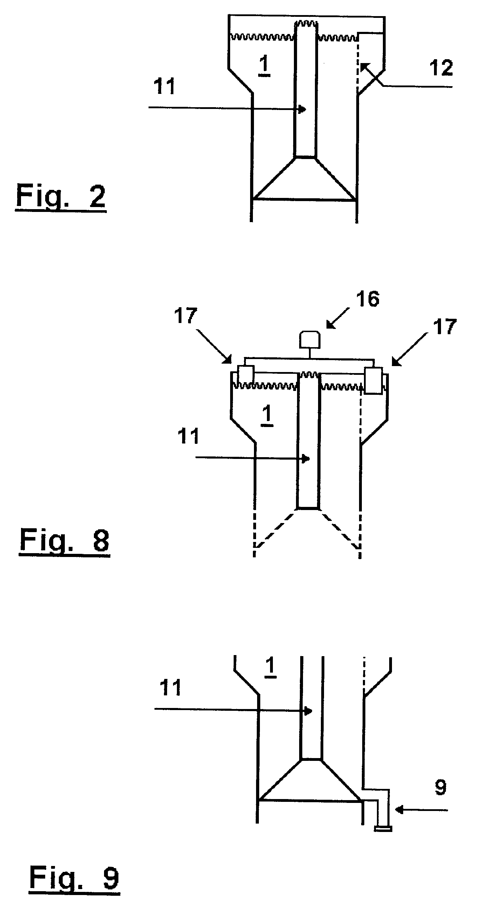

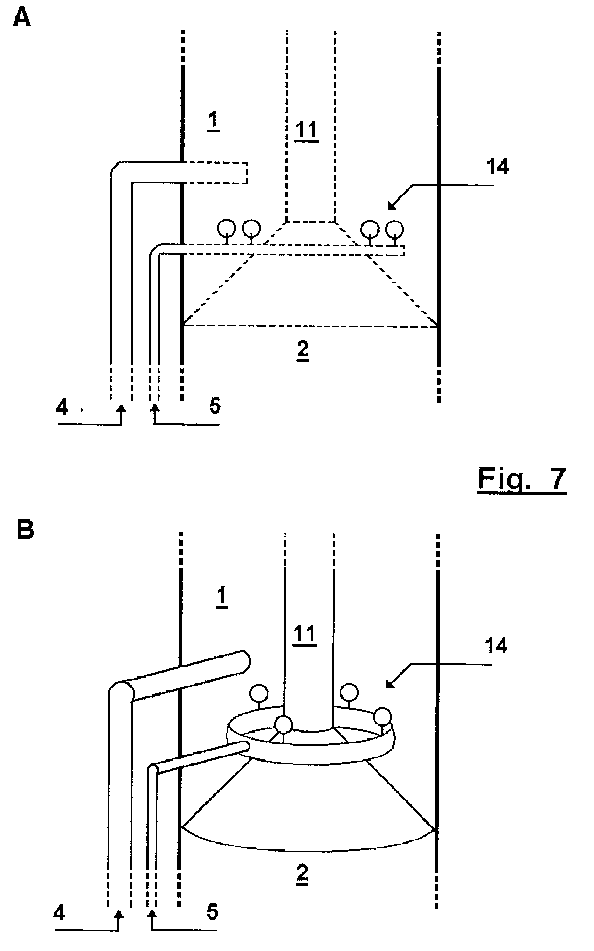

Coarse water to be treated enters the float (Figure 7) passing, by a communicating vessel system, to the mixing chamber 2 and later, through communication openings 21, to the aeration and settling chamber 3 (Figure 11). Communication between the mixing chamber 2 and flotation chamber 1 is made, for example, through one of the two following devices: air pump (Figure 2) or venturi (Figure 4). In both cases liquor passes from the mixing chamber 2 to the flotation chamber 1. Communication between mixing chamber and aeration chamber 3 is complete due to the particular aeration.

### - Structure

The equipment constitutes itself a rigid stucture, having in its upper part a working platform 25, with arrangement of auxiliary equipments, as well as access boards to the different points of the installation (Figure 14).

### - Processes

When considering the integration of processes, several alternatives are submitted with development of adequate mechanical and operation solutions in order to obtain a suitable efficiency for the system.

### Processes object of the invention

a) Process with overflow constant flotation. Flotation under a constant free surface obtained by overflow, with differentiation (a.1) and without differentiation (a.2) of two zones in the flotation and dispersion tank.
   Accordingly, several options can be construed depending on the schematic outlines (1,A-1,2,3'-x) ... (1,B-1,2,3' - x) above explained, in which "x" means any of the mentioned options.
b) Process with constant flotation of closure. Flotation under constant free surface obtained by controlled closure with the aeration tank: schema (1,x-1,2'x-x).
c) Process with variable flotation. Flotation under variable free surface as in the aerator (c.1) or modified in part by using different gas retention both in the aerator and float (c.2).
d) Process with discontinuous flotation. Aeration is carried out at the same time than in the aerator, but for the sweeping of oils it is previously interrupted, and after a short interval the sweepers are driven (during decantation in the aerator).

### Example of configuration of the system

Here below it is described in a detailed manner the process designed as a.1 with recycling of air pumping.

A characteristic operation cycle would be:

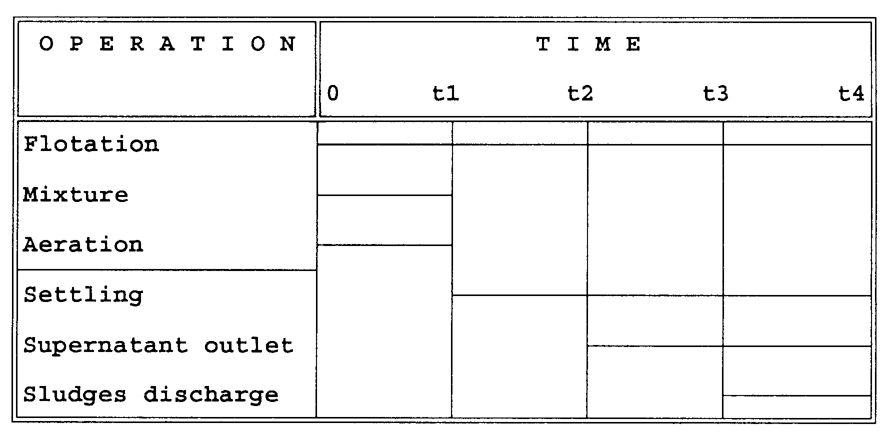

Times are represented according to the characteristics of the waters to be treated and of desired depuration level.

Characteristic magnitude orders are: t1 between 1 and 24 hours, t4-t1 between 0.1 and 12 hours, t4-t2 between 0.1 and 3 hours and t4-t3 between 0.05 and 1 hour.

Times represented are also valid examples for other possible configurations of the system of the invention.

The coarse water to be treated enters in a continuous stream the lower part, over the aerators, of the flotation chamber 1. The float is contnuously aerated and the oils and floating solids are forced to the surface from where they are removed, whereas the liquid from the lower part of the float passes in the same continuous way, through a communicating vessel, to the mixing chamber 2.

The mixing chamber is continuously fed and it is aerated during the same time than the aeration chamber 3, that is why a complete mixture is produced, and at the same time, through air pumping tube 11, which passes through the float and discharges in its surface, a part of the mixture liquor passes to the flotation chamber 1. During the time which aeration is interrupted, chamber 2 is fed and the generated flow is piston type.

Aeration and settling chamber 3 is fed continuously through the lower openings 21 which communicate with the mixing chamber 2. This chamber is strongly aerated for a while, what provides a good mixture and the adsorption-degradation of the organic material, followed by the settling stage where aeration is interrupted so as to permit the settling of sludges and clarification of the supernatant.

After a period of time since starting settling, discharge of the depurated clarified is caused, and later the excess sludges not removed by flotation are discharged through the bottom 8. Once completed these operations a new cycle begins.

Other systems according to the invention would be configurated in a similar way as above described, with the inherent differences of the introduced changes, for example with reference to the processes previously designated as "b", "c", and "d".
b) Constant flotation of closure: It would allow more possibilities of levels in the different parts of the system.
c) Variable flotation: Relation between levels is simplified, which is uniform in the interior, having to regulate mechanically the floats discharge from the float.
d) Discontinuous flotation: Monitoring of air provision to processes is simplified, equal in all parts, realizing the discharge of floats in intervals.

### Examples of application

Tests have been realized in a reactor of a pilot plant of 1.4 m³ of total volume, section 0.36 m² and 4 m of height. It is provided with aeration and bubble mixture, by means of orificies and membrane bubblers of fine bubble. The transport of the liquor mixture was carried out by an air pump with a tube of 0.08 m of diameter. The air flows used were kept within the interval of 1 to 10 m³/hour with a working pressure of 1 to 6 bar. Both feeding and the different discharges were realized through pneumatic valves. Feeding is prepared in a tank of 100 dm³ and it is introduced through a peristaltic pump of variable flow, between 0.01 and 6,000 dm³/h. The control of the installation, especially the programme of times, was realized by a programmed robot and a computer in basic language.

Here follow Examples of configuration of the system of the invention applied to diverse problems of waste waters:

### Example 1. Urban mixture waste

A urban waste water stream with 200 mg/dm³ of oils and 250 mg/dm³ of DBO at the start, which would have needed three tanks under conventional processes, by means of the system of the invention in a single equipment would allow to eliminate 50% of oils in the flotation zone and about 30% of DBO. At the outlet it is obtained about 90% of oils elimination and 95% of DBO, with degradation time of 4.5 hours and 1 hour for settling.

### Example 2. Chemical industry waste

A chemical waste stream with 600 mg/dm³ of oils and 800 mg/dm³ of DBO at the start, is treated in a single equipment increasing the percentage corresponding to flotation and time operation till 100%. To obtain yields of 90% of oil elimination and 90% of DBO, degradation time of 8 hours and settling time of 2 hours are required.

### Example 3. Dairy waste

A dairy industry waste with 400 mg/dm³ of fats and 400 mg/dm³ of DBO is treated with an equipment as above mentioned, fats elimination by flotation is regulated between 10 and 95% for a correct management of sludges. In a simple manner it can be obtained more than 90% of fats elimination and more than 97% of DBO with degradation time of 5 hours and settling time of 1.5 hours.

## Claims

1. A system for the treatment of waste waters, characterized by integrating the processes of primary flotation, biological depuration (aerobic and anaerobic) and sludges/supernatants separation in a single equipment in which, according to time cycles, the interactions between the three basic stages, flotation-aeration-settling, of the preceding processes, for treating waste waters according to their different characteristics are regulated.

2. A system, according to claim 1, characterized in that flotation can be continuous or discontinuous, the equipment being fed continuously or discontinuously.

3. A system, according to claims 1 and 2, characterized in that sludges of the biological process can be separated by secondary settling, or in the flotation stage or by both stages.

4. A system, according to claims 1 to 3, characterized in that the amount of oils/fats to eliminate, by flotation, is regulated between 5 and 95% in order to control the characteristics of the subsequent processes.

5. A system, according to claims 1 to 4, characterized in that sludges and oils are separated by flotation in order to control the characteristics of the extracted sludges.

6. Application of a system according to the preceding claims to the separation of oils and floats, together with the biological degradation of the remainder of the organic matter, in the following ranges:
a) Oils and floats from 1 mg/dm³ to 10 g/dm³, with retention times in flotation between 0.1 and 5 hours, and with the possibility of extracting mixture of floating sludges;
b) Degradation of organic matter from 60 mg/dm³ to 6,000 mg/dm³ of DBO, with retention times between 1 and 24 hours;
c) Settling of sludges between 300 mg/dm³ and 20,000 mg/dm³ of suspended solids, with operation times between 0.1 and 12 hours;
d) Liquids and solids extraction times between 0.1 and 3 hours.

7. A system, according to the preceding claims, with sludges recycling by air pumping in order to promote interaction of flotation, degradation and solids separation.

8. A system, according to the preceding claims, using venturi-pumping or external impulsion instead of air pumping for recycling the sludges.

9. A system, according to the preceding claims, induced with bubble flotation or with dissolved air.

10. A system, according to the preceding claims, with interaction between the three stages, with constant or variable surface flotation.

11. A system, according to the preceding claims, with interaction between the three stages, with level of the degradation stage of constant or variable surface.
